# EUROPÄISCHE PATENTSCHRIFT

(11) **EP 1 089 822 B1**
(45) Veröffentlichungstag und Bekanntmachung des Hinweises auf die Patenterteilung: **03.09.2003**
(21) Anmeldenummer: 99927960.7
(22) Anmeldetag: 10.06.1999
(51) Int. Cl.: B01L 3/00, B01J 19/00

(54) **EINRICHTUNG FÜR EINE NAHEZU GLEICHZEITIGE SYNTHESE EINER VIELZAHL VON PROBEN**
DEVICE FOR CARRYING OUT AN ALMOST SIMULTANEOUS SYNTHESIS OF A PLURALITY OF SAMPLES
DISPOSITIF POUR EFFECTUER UNE SYNTHESE PRATIQUEMENT SIMULTANEE D'UNE PLURALITE D'ECHANTILLONS

(30) Priorität: 23.06.1998 DE 19827754
(43) Veröffentlichungstag der Anmeldung: 11.04.2001
(73) Patentinhaber: Graffinity Pharmaceuticals Aktiengesellschaft, 69120 Heidelberg (DE)
(72) Erfinder: SCHMIDT, Kristina, D-69198 Schriesheim (DE); VETTER, Dirk, D-69120 Heidelberg (DE)
(74) Vertreter: Bock, Gerhard
(86) Internationale Anmeldenummer: EP9904050
(87) Internationale Veröffentlichungsnummer: WO99067024

(56) Entgegenhaltungen:
- EP-A- 0 075 605
- WO-A-91/17832
- WO-A-97/33737
- WO-A-97/37755
- WO-A-98/15355
- US-A- 5 429 807

## Beschreibung

Die Erfindung betrifft eine Einrichtung für eine nahezu gleichzeitige Synthese einer Vielzahl von Proben, welche insbesondere im automatisierten Laborbetrieb im Bereich der kombinatorischen Chemie zum Einsatz gelangt.

Probenpartikel ("Perlen", "Beads") werden seit Jahrzehnten für die Separation und Synthese im labortechnischen Bereich eingesetzt. Meistens handelt es sich dabei um Glas- oder Polymerkügelchen, welche Durchmesser von 0.01 mm bis 1 mm, typischerweise um die 0.1 mm, besitzen und trocken oder vorgequollen als loses Schüttgut in einen Behälter gefüllt und dann mit Flüssigkeit umspült werden, wobei zwischen der Festphasenoberfläche der Partikel und der sie umgebenden Flüssigkeit ein Adsorptions- oder Reaktionsprozeß abläuft. Verfahren der Säulenchromatographie (z.B. Gelfiltration), der Säulenextraktion, der Immundiagnostik, der Biomolekülreinigung (z.B. DNA-Reinigung) sowie der homogenen und heterogenen Synthese (von Oligonukleotiden, Peptiden oder kombinatorischen Substanzbibliotheken) nutzen diese Technik aus.

Neben der Automatisierung und Miniaturisierung von Labortechniken ist deren Parallelisierung von großem Interesse, um einen höheren Probendurchsatz zu erzielen und damit langwierige Verfahren zu beschleunigen. Zu diesem Zweck werden Proben oft in einem Raster angeordnet, so daß die Identität (Herkunft, Beschaffenheit) der Probe mit einer Flächenkoordinate verknüpft werden kann. Diese Koordinaten sind besonders für automatisierte Systeme zur Probenbearbeitung leicht zu erfassen. Für flüssige Proben sind daher sogenannte Mikrotiterplatten entwickelt worden, welche Kavitäten in rechtwinkligen Anordnungen von 8 x 12 (96 Proben), 16 x 24 (384) oder 32 x 48 (1536) tragen. Die Abmessungen der Kavitäten dieser Probenträger richten sich dabei nach den mit handelsüblichen Geräten (Pipetten) verläßlich dosierbaren Volumina und unterliegen mit dem Fortschreiten der Dosiertechnologie einer kontinuierlichen Miniaturisierung, was durch die beliebige Aliquotierbarkeit (Aufteilung einer Mutterprobe in verschiedene Tochterproben) von Flüssigkeiten vereinfacht wird.

Im Rahmen der Arbeiten zur Miniaturisierung von Laborverfahren wird nach Möglichkeiten gesucht, Probenpartikel, analog zur Anordnung von flüssigen Proben, in einem zweidimensionalen Raster zu verteilen. Da die Miniaturisierung der Flüssigkeitsdosierung bereits weit fortgeschritten ist, wird somit der einzelne Partikel zur kleinsten Einheit. Weiterhin besteht die Anforderung, die hohen Stückzahlen, welche bei der Arbeit mit Partikeln üblich sind, zu bewältigen. 1 g Polymerharz enthält ca. 1 Million Partikel.

Zur Befüllung von Mikrotiterplatten oder Reaktionsgefäßen sind verschiedene Lösungen bekannt geworden.
So beschreibt WO 98/24543 A1 eine Vorrichtung zur Übertragung von Flüssigkeiten, bei der unter anderem eine Mikrotiterplatte vorgesehen ist, deren Kammern im Bodenbereich mindestens eine Öffnung aufweisen, die so dimensioniert ist, daß bei einem Befüllvorgang der Flüssigkeitsdurchtritt durch diese Öffnung mittels Kapillarkräften vermieden wird. In WO 98/06490 A1 wird eine Apparatur für eine organische Festphasensynthese beschrieben, bei der das Reaktionsgefäß derart über einem Sammelgefäß zur Aufnahme von Flüssigkeit angeordnet ist, daß die Überführung der Flüssigkeit durch Erzeugen eines Unterdrucks erreicht werden kann. Das Halten der Flüssigkeit im Reaktionsgefäß wird hingegen durch einen geringen Überdruck gewährleistet. Aus WO 97/19749 A1 ist eine Vorrichtung für adressierbare kombinatorische Substanzbibliotheken bekannt, bei der jeweils eine Substanz in einem Kapillarröhrchen dargestellt wird, wobei das Befüllen mit Flüssigkeit durch Kapillarkräfte erfolgt. In WO 97/37755 A1 ist eine Platte beschrieben, die eine Vielzahl von Reaktionszellen enthält, die in Reihen und Spalten angeordnet sind, welche durch Pumpen mit Flüssigkeit versorgt werden. Weiterhin sind in den Schriften WO97/43629A1 und WO 98/16315 A1 Flüssigkeitsverteilungssysteme beschrieben, die aus mehreren Platten bestehen, wobei der Flüssigkeitsfluß durch eine Kapillarbarriere bzw. durch elektrokinetisches Pumpen gesteuert und kontrolliert wird.

Die Miniaturisierung genannter Trägerplatten geht einher mit der Miniaturisierung der entsprechenden Befülltechnologien und stößt bei herkömmlichen automatisierten Pipettiervorrichtungen an geometrische oder zeitliche Grenzen, da jeder einzelne Probenpartikel mit Flüssigkeit zu versorgen ist.

Der Erfindung liegt die Aufgabe zugrunde, eine Einrichtung für die nahezu gleichzeitige Synthese einer Vielzahl von Proben, die gebunden an Mikroperlen, welche in Kavitäten einer Trägerplatte vorliegen, anzugeben.

Die Aufgabe wird durch die Merkmale des ersten Patentanspruchs gelöst. Vorteilhafte Ausgestaltungen sind von den nachgeordneten Ansprüchen erfaßt.

Die Erfindung soll nachstehend anhand schematischer Ausführungsbeispiele näher erläutert werden. Es zeigen:
- Fig. 1: den grundsätzlichen Aufbau einer erfindungsgemäßen Einrichtung in perspektivischer Ansicht, sowie einer vergrößerten Detaildarstellung,
- Fig. 2a: eine seitliche Ansicht einer Einrichtung nach Fig. 1,
- Fig. 2b: eine Draufsicht auf eine Einrichtung nach Fig. 1,
- Fig. 3: eine Draufsicht auf eine Einrichtung nach Fig. 1 mit der Lage einer erfindungsgemäßen Abdeckung in zwei Syntheseschritten und
- Fig. 4: eine Ausbildungsmöglichkeit einer Abdeckung mit mehreren Funktionsabschnitten in Draufsicht.

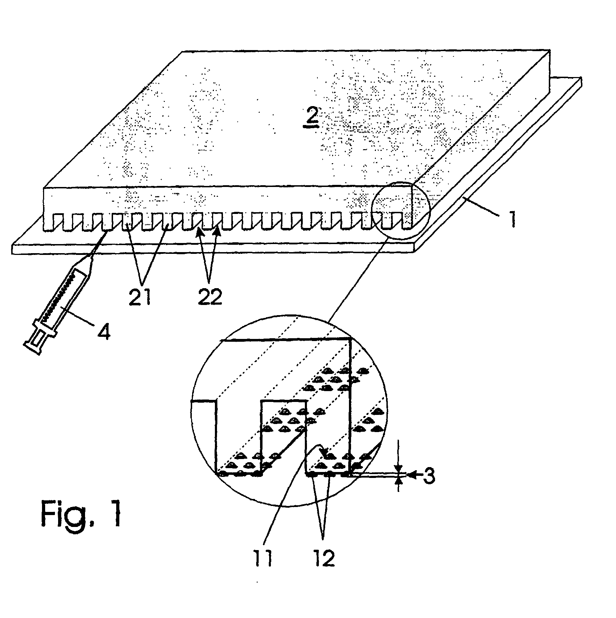

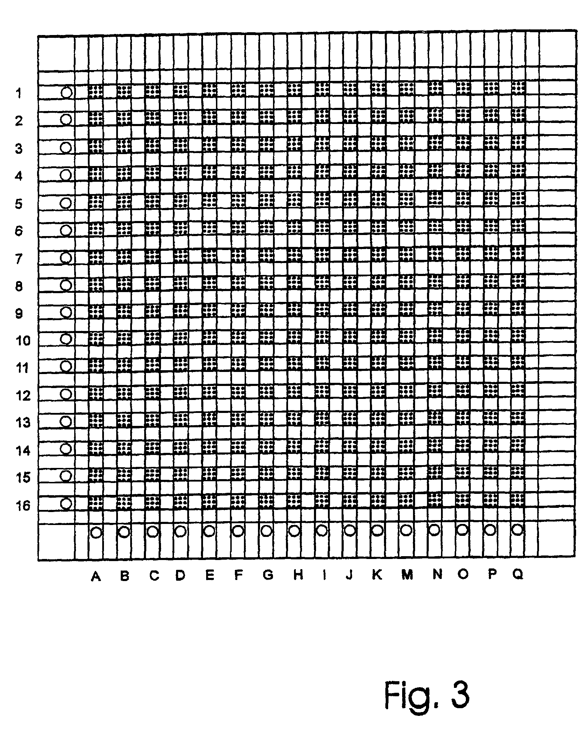

Ohne die Erfindung darauf zu beschränken, wird in Figur 1 von einer Trägerplatte 1 ausgegangen, bei der jeweils in einzelnen Kavitäten 11 Mikroperlen 12 derart vorgesehen sind, daß diese die Kavität überragen. Bei Verwendung von Mikroperlen mit einem Durchmesser von 100 µm ragen diese im einsortierten Zustand zwischen 20 bis 50 µm aus der Oberfläche der Trägerplatte 1 heraus. Im Beispiel gehören jeweils 9 solcher Mikroperlen zu einem Probenaufnahmebereich, wobei alle Probenaufnahmebereiche zueinander in Zeilen und Spalten ausgerichtet sind (vgl. Fig. 3). Oberhalb der perlengefüllten Trägerplatte 1 ist eine abnehmbare Abdeckung 2 vorgesehen, die als wesentlichste Elemente Stege 21 trägt, welche in ihrer Stegbreite und -länge so ausgebildet sind, daß sie bei Auflage auf die Trägerplatte 1 alle Probenaufnahmebereiche einer Zeile oder Spalte erfassen. Dabei ist, durch das in definierter Weise vorgebbare Überragen der Mikroperlen 12, ein Kapillarspalt 3 vorgebbarer Höhe und durch die Vorgabe der Breite der Stege 21 definierter Breite geschaffen. Bei einer anderen Anordnung der Mikroperlen, bspw. mehrere Mikroperlen zurückgesetzt in einer gemeinsamen Kavität, kann ein solcher Kapillarspalt auch dadurch gebildet sein, daß die Trägerplatte 1 im Bereich der Auflage der Stege 21 und/oder die Stege 21 selbst mit Abstandshaltern definierter Höhe versehen sind.
Zur seitlichen Festlegung der derart gebildeten Kapillarspalte 3 sind die Stege 21 durch größere Ausnehmungen 22 voneinander beabstandet, die so bemessen sind, daß in ihnen keine Kapillarkräfte mehr wirken.
Die Höhe des Kapillarspaltes 3, bei dem noch Kapillarkräfte zum Transport von Flüssigkeiten wirken, hängt von der Oberflächenspannung der Materialien für die Trägerplatte 1 und der Stege 21 und der zum Einsatz gelangenden Flüssigkeit ab. Bei Verwendung von Materialien wie Glas und Metall, zwischen denen ein Spalt gebildet ist, und Wasser als Flüssigkeit, wirken die Kapillarkräfte bis zu Spalthöhen von 500 µm. Eine gezielte Hydrophilisierung des Glases und/oder der Metalloberfläche läßt, bei Verwendung von Wasser, einen Flüssigkeitsstrom durch Kapillarkräfte auch bei größeren Abständen zu. Je nach der zum Einsatz gelangenden Syntheseflüssigkeit können die Stege 21 im Bereich ihrer Auflage auf der Trägerplatte mit einer hydrophilen oder hydrophoben Oberfläche versehen sein, wobei zumindest die Seitwandungen der die Stege begrenzenden Ausnehmungen 22 mit einer jeweils entgegengesetzt wirkenden Oberflächenbelegung versehen sein sollen.

Der durch die im Beispiel durch die überstehenden Mikroperlen 12 gebildete Kapillarspalt eröffnet die Möglichkeit, gezielt Flüssigkeiten entlang des Spaltes fließen zu lassen. Dabei ist im Beispiel für die Abdeckung 2 eine strukturierte Deckplatte eingesetzt, die parallele Ausnehmungen 22 aufweist. Die Ausnehmungen 22 bewirken eine Trennung von zwei zueinander parallel verlaufenden Kapillarspalten.
Die Befüllung der Kapillarspalte kann erfolgen, indem an die Stirnfläche der Abdeckung, jeweils an den Anfang eines Spalts, Flüssigkeit pipettiert wird, wie es in Fig. 1 anhand eines Spaltes mittels eines dosierbaren Flüssigkeitsspenders 4 schematisch angedeutet ist.
Um jeden Kapillarspalt mit einer anderen Flüssigkeit zu befüllen, erfordert dies ein sehr sorgfältiges Pipettieren der Flüssigkeiten, um das Vermischen zweier Flüssigkeiten zu verhindern. Um eine gleichzeitige und gleichmäßig dosierte Befüllung aller Kapillarspalte 3 zu gewährleisten, ist es vorteilhafter, die Flüssigkeitszufuhr über Bohrungen 13 in der Trägerplatte 1 oder Bohrungen 25 in der Abdeckung 2, die jeweils einer Zeile und Spalte der in einer Reihe befindlichen Kavitäten vorgelagert ist, vorzunehmen. Über mit diesen Bohrungen verbundene schlauchartige Anschlüsse 5 oder Adapterstücke erfolgt eine Verbindung zu im weiteren nicht näher dargestellten und jeweils einer Zeile oder Spalte zugeordneten Flüssigkeitsreservoirs, z.B. einer Spritzenpumpe, wobei vorteilhaft vorgesehen ist, alle Flüssigkeitreservoirs gemeinsam mit einem einheitlichen definierten Druck zu beaufschlagen. Über solche Anbindungen können nun wohldosiert Flüssigkeiten in die Kapillarspalte eingeführt werden. Die Pumprate der Spritzenpumpe muß dabei sehr genau an die Fließgeschwindigkeit der Flüssigkeit, getrieben durch die Kapillarkräfte, angepaßt sein, was im Einzelfall experimentell ermittelbar ist, um ein Übersprechen der Flüssigkeit von einem Kapillarspalt zum benachbarten zu vermeiden.
Wie bereits angedeutet, ist es ebenfalls möglich, die Befüllung der Kapillarspalte über die Deckplatte 2 zu realisieren. Dann sind in der Deckplatte, mittig zu den Stegen 21, die Bohrungen für die Anbindung von Schläuche herzustellen. Eine solche Ausführung erlaubt es ebenso, anstatt von Schlauchanbindungen einen Adapter für eine Mikrotiterplatte vorzusehen, und die Befüllung der Kapillarspalte durch Ausnutzung von hydrostatischen Druckunterschieden zu realisieren.

Ein Vorteil bei Verwendung von Spritzenpumpen, verknüpft mit Schlauchanbindungen stellt die Abgeschlossenheit des Systems dar, so daß Verdunstungen vermieden werden. Dieses geschlossene System ist auch dann von Vorteil, wenn Chemikalien verwendet werden, die nicht mit Luft in Berührung kommen dürfen.

Mit den beschriebenen Varianten, kann eine Befüllung von beliebig vielen Zeilen mit Flüssigkeiten erfolgen. Derzeitig, in Anpassung an vorhandene Mikrotiterplatten, sind mit der beschriebenen Einrichtung 96 Zeilen gleichzeitig befüllbar. Der Anzahl an Zeilen sind dabei jedoch keine Grenzen gesetzt, und mit zunehmendem Einsatz von mikrotechnischen Bearbeitungsverfahren lassen sich weit mehr als 100 Zeilen realisieren.

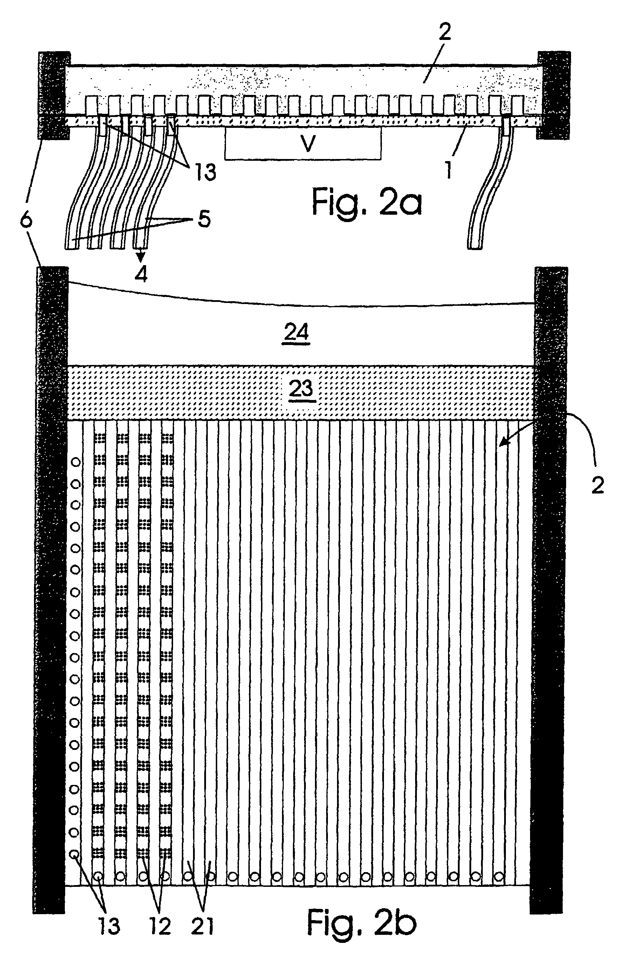

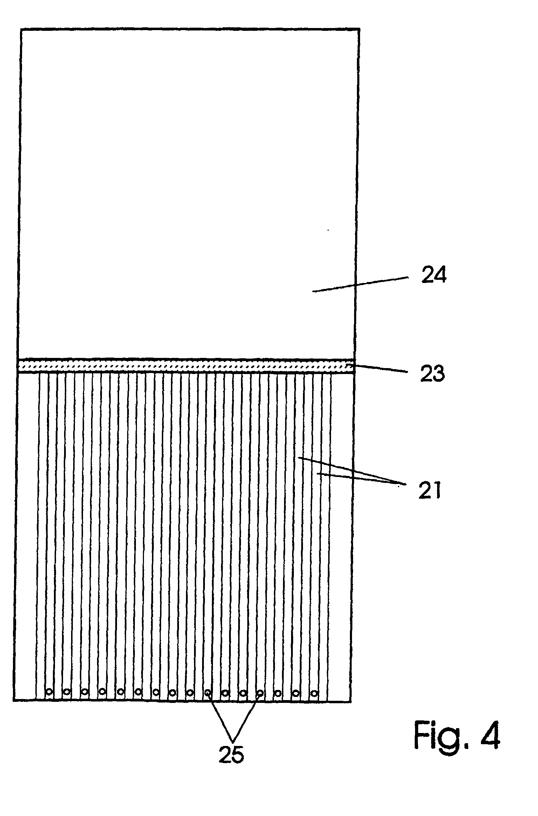

Figur 2a zeigt eine Ausführung der Einrichtung nach Fig. 1 in einer vorderen seitlichen Ansicht, dabei ist die Trägerplatte 1 mit Bohrungen 13 versehen, von denen in Fig. 2a lediglich fünf dargestellt sind, an die sich schlauchartige Anschlüsse 5 anschließen, die zu nicht dargestellten Flüssigkeitsreservoirs 4 führen. Die Trägerplatte 1 ist ihrerseits von einem Verschiebetisch V aufgenommen, der eine laterale Verschiebung parallel zur Blattnormalen ermöglicht. Die Trägerplatte 1 und die Abdeckung 2 sind weiterhin zueinander vermittels einer Führung 6 verbunden. Eine solche Ausbildung ermöglicht die Aufnahme einer weiter ausgestalteten Abdeckung 2, wie sie in Fig. 2b in Draufsicht näher dargestellt ist. Neben der bisher beschriebenen transparenten Abdeckung 2, mit den ihr gegebenen Stegen 21, beinhaltet die Abdeckung 2 weiterhin einen porösen Abschnitt 23, welchem ein planarer Abschnitt 24 nachgeordnet ist, der in seiner Ausdehnung so bemessen ist, daß er die gesamte Trägerplatte 1 unter Bildung eines alle Probenbereiche erfassenden Kapillarspaltes abzudecken vermag, wenn dieser Abdeckungsbereich über die Trägerplatte 1 verschoben ist. Die vollständige Ausbildung einer derartigen Abdeckung allein ist in Fig. 4 dargestellt, wobei dort alternativ die Bohrungen 25 dem ersten Teil der Abdeckung 2 zugeordnet sind.

Zur eigentlichen Synthese der gewünschten Proben wird mit der beschriebenen Einrichtung wie folgt verfahren: Die mit Mikroperlen 12, die bei geeigneter Porosität bspw. ein Probenflüssigkeitsvolumen von 0,25 nl aufzunehmen vermögen, gefüllte Trägerplatte 1 der Größe 250 • 250 mm² wird mit der Abdeckung 2 mit den Ausnehmungen 22 in Kontakt gebracht. Über eine nicht näher dargestellte Justiervorrichtung werden Trägerplatte 1 und die Abdeckung 2 zueinander ausgerichtet, so daß jeweils ein hervorstehender Steg 21 auf einer Reihe mit perlengefüllten Reaktionskammern aufliegt. Die Stege 21 verbinden bspw. eine Zeile mit 96 Probenfeldern, die 864 Mikroperlen 12 tragen. Die Trägerplatte besitzt im Beispiel außerdem zweimal 96 Durchgangsbohrungen 13, die in der Verlängerung der Zeilen und Spalten der Perlenarrays liegen. An diese Bohrungen sind an der Rückseite der Trägerplatte die beschriebenen Schläuche 5 befestigt. Die 192 Schläuche führen zu den mit Chemikalien gefüllten Flüssigkeitreservoirs, bspw. Spritzen. Die Spritzen werden mit einem Spritzenantrieb gleichzeitig mit Druck beaufschlagt, und die Flüssigkeiten werden über die Schläuche 5 zu der Trägerplatte 1 transportiert. Je ein Kapillarspalt 3 wird mit jeweils einer Chemikalie befüllt. Dies wird erreicht, indem das Ende eines jeden Steges genau über einer Bohrung sitzt, aus der die Flüssigkeit in den Kapillarspalt dringt. Die Pumprate, gesteuert durch die Spritzenantriebe muß mit der Fließgeschwindigkeit der Flüssigkeit korrelieren, die durch die Kapillarkräfte getrieben wird. Bei Verwendung eines etwa 30 µm hohen, 1000 µm breiten Kapillarspaltes mit einer Länge von 250 mm dauert ein Befüllvorgang ca. 3 min.
Die Trägerplatte 1 befindet sich auf dem Verschiebetisch V, der eine Bewegung parallel zu den Stegen 21 ermöglicht. Die Abdeckung soll im Beispiel hingegen während der gesamten Synthese fest arretiert sein. Im Anschluß an den ersten Syntheseschritt wird die Trägerplatte 1 unterhalb der Abdeckung 2 entlang der Stege 21 verschoben. Dabei werden die Mikroperlen an dem porösen Abschnitt 23 der Abdeckung 2 vorbeigeführt. Die Porengröße des porösen Abschnitts muß dabei deutlich geringer sein, als der Durchmesser der Mikroperlen. Das poröse Gebiet saugt die Synthesechemikalien auf und diese werden von dort mittels einer unter Unterdruck abreitenden und nicht näher dargestellten Vorrichtung ableitet und die Mikroperlen 12 auf diese Weise getrocknet. Die Trägerplatte 1 wird vollständig unter der porösen Zone vorbeigeführt, bis die gesamte Trägerplatte sich im hinteren Bereich der Abdeckung, der eine ebene Oberfläche gegeben ist, befindet. In diesem Bereich 24 erfolgt eine Drehung der Trägerplatte 1 um 90°, die für den zweiten Syntheseschritt notwendig ist. Dabei wird auch hier die Trägerplatte 1 mittels eines Drehtischs bewegt, während die Abdeckung fest eingespannt bleibt. Nach der Drehung der Trägerplatte 1 erfolgt ein Spülen der Mikrosyntheseperlen. Die Spüllösung wird ebenfalls durch Kapillarkräfte zu den Perlen transportiert. Ein erneutes Trocknen der Perlen erfolgt durch ein Überstreichen des porösen Abschnitts 23 der Abdeckung, wie oben beschrieben. Danach befindet sich die Abdeckung 2 wieder in einer Syntheseposition. Der zweite Syntheseschritt läuft nun in der gleichen Art und Weise ab, die Trägerplatte 1 liegt jedoch um 90° gedreht unter der Deckplatte, und ein weiterer Kopplungsschritt erfolgt. Weitere Kopplungsschritte sind in beliebiger Anzahl möglich. Nach der beschriebenen zweistufigen Synthese sind somit, ausgehend von 96 Zeilen und 96 Spalten, 9216 verschiedene Kombinationen von zweimal 96 Substanzen entstanden. Weitere Syntheseschritte, jeweils nach einer Drehung der Platten zueinander, sind in beliebiger Anzahl möglich. Zwei der beschriebenen Synthesepositionen sind in Figur 3 am Beispiel von sechzehn Zeilen (1 bis 16) und sechzehn Spalten (A bis Q) beispielhaft dargestellt.

Für die Abdeckung 2 hat sich als besonders vorteilhaft die Verwendung von Borofloatglas erwiesen. Um den Flüssigkeitsstrom, der sich in genannten Kapillarkanälen ausbildet visuell überwachen zu können, sollte in jedem Fall ein transparentes Material für die Abdeckung 2 gewählt werden. Das Glas zeichnet sich zudem durch eine hohe Ebenheit aus, ein wichtiges Kriterium für die Realisierung gleichmäßig dicker Kapillarspalte über eine Länge von 250 mm. In die Abdeckung sind in einem ersten Bereich, unter der Voraussetzung von 96 Zeile bzw. Spalten, 97 Ausnehmungen 22 mit einem Abstand von 2,25 mm mittels Diamantwerkzeugen eingearbeitet. Die Tiefe und Breite einer Ausnehmung ist so dimensioniert, daß die Ausnehmung 22 selbst nicht mehr als Kapillare wirkt. In der beschriebenen Ausführung sind dafür eine Breite von 1000 µm und eine Tiefe von 1500 µm gewählt, somit bleiben zwischen zwei Ausnehmungen Stege 21 mit einer Breite von 1,25 mm stehen. Die Verwendung anderer Materialien für die Abdeckung liegt im Rahmen der Erfindung.

Die oben beschriebene Ausbildung der Abdeckung 2 ist im Sinne der Handhabung und der Stabilität der Einrichtung die vorteilhafteste. Es liegt jedoch ebenfalls im Rahmen der Erfindung, die vorgesehenen Stege durch eine parallele Anordnung von Streifen zu realisieren. Hierfür werden in Breite und Länge entsprechend dimensionierte einzelne Glasstreifen eingesetzt. Die Höhe der Streifen kann dabei beliebig gewählt sein und richtet sich nach der erwünschten Stabilität der Einrichtung. Die einzelnen Streifen werden im Abstand der Probenaufnahmebereiche parallel angeordnet und an ihren Enden durch Aufkleben auf einen Trägerstreifen oder eine Trägerplatte zueinander fixiert.

### Bezugszeichenliste

- 1 -: Trägerplatte
- 11 -: Kavitäten
- 12 -: Mikroperlen
- 13, 25 -: Bohrungen
- 2 -: Abdeckung
- 21 -: Stege
- 22 -: Ausnehmungen zwischen den Stegen 21
- 23 -: poröser Abschnitt
- 24 -: planarer Abschnitt
- 3 -: Kapillarspalt
- 4 -: Flüssigkeitsspender
- 5 -: Anschlüsse
- 6 -: Führung

## Patentansprüche

1. Einrichtung für eine nahezu gleichzeitige Synthese einer Vielzahl von Proben, beinhaltend eine plane Trägerplatte (1) mit einer Vielzahl von Kavitäten (11), welche in einem wiederholenden Raster unter Ausbildung von Reihen regelmäßig angeordnet sind und welche Mikroperlen (12) aufnehmen, **dadurch gekennzeichnet, daß** eine abnehmbare Abdeckung (2) vorgesehen ist, die mit Stegen (21) definierter Breite versehen ist, welche jeweils mindestens eine einer Reihe zugehöriger Kavitäten (11) derart überdecken und beabstanden, daß zwischen den Mikroperlen (12) und den Stegen (21) Kapillarspalte (3) gebildet werden, denen jeweils ein dosierbarer Flüssigkeitsspender (4) zugeordnet ist, und zwischen benachbarten Stegen (21) jeweils eine so große Ausnehmung (22) verbleibt, daß diese kapillarinaktiv ist.

2. Einrichtung nach Anspruch 1, **dadurch gekennzeichnet, daß** die Abdeckung (2) gebildet ist durch eine transparente Platte, in die parallele Vertiefungen zur Bildung der größeren Ausnehmungen (22) eingebracht sind.

3. Einrichtung nach Anspruch 1, **dadurch gekennzeichnet, daß** die Kapillarspalte (3) gebildet sind durch eine Beabstandung von aus den Kavitäten (11) herausragenden Mikroperlen (12).

4. Einrichtung nach Anspruch 1, **dadurch gekennzeichnet, daß** die Kapillarspalte (3) gebildet sind durch Abstandshalter auf der Trägerplatte (1) und/oder auf den Stegen (21).

5. Einrichtung nach Anspruch 1, **dadurch gekennzeichnet, daß** die Stege (21) im Bereich ihrer Auflage auf der Trägerplatte (1) mit einer hydrophilen oder hydrophoben Oberfläche versehen sind, wobei zumindest die Seitwandungen der die Stege (21) begrenzenden Ausnehmungen (22) mit einer jeweils entgegengesetzt wirkenden Oberflächenbelegung versehen sind.

6. Einrichtung nach Anspruch 1, **dadurch gekennzeichnet, daß** die Trägerplatte (1) und die Abdeckung (2) zueinander in einer lateral verschiebbaren und um 90° drehbaren Verbindung vermittels einer Führung (6) gehaltert sind.

7. Einrichtung nach Anspruch 1 und 6, **dadurch gekennzeichnet, daß** der Abdeckung (2), den Stegen (21) nachgeordnet, ein oder mehrere poröse Abschnitte (23) und ein weiterer, die gesamte Trägerplatte (1) erfassender planarer Abschnitt (24) zugeordnet sind.

8. Einrichtung nach Anspruch 1, **dadurch gekennzeichnet, daß** die spaltbezogene Flüssigkeitszufuhr über Bohrungen (13), die jeweils einer Reihe von Kavitäten vorgelagert sind, in der Trägerplatte (1) erfolgt.

9. Einrichtung nach Anspruch 1, **dadurch gekennzeichnet, daß** die spaltbezogene Flüssigkeitszufuhr über Bohrungen (25), die jeweils einer Reihe von Kavitäten vorgelagert sind, in der Abdeckung (2) erfolgt

10. Einrichtung nach Anspruch 1 und 8 oder 9, **dadurch gekennzeichnet, daß** genannte Bohrungen (13 oder 25) mit schlauchartigen Anschlüssen (5) oder Adapterstücken versehen sind, die jeweils mit einem, mit einem definierten Druck beaufschlagbaren Flüssigkeitreservoir (4) in Verbindung stehen.

## Claims

1. Device for a substantially simultaneous synthesis of a plurality of samples comprising a support plate (1) having a plurality of cavities (11) which, under formation of rows, are regularly arranged in a repeated raster, and which are adapted to contain micro-beads (12), **characterized in that** a detachable cover (2) is provided, which has barriers (21) of a defined width, said barriers cover and space apart at least one respective cavity (11) associated to one row of cavities in such a manner that capillary gaps (3) are formed between the micro-beads (12) and the barriers (21), one dosageable liquid supply means (4) being associated to each of said capillary gaps (3), and **in that** so large a recess (22) remains between two respective adjacent barriers (21) that said recess (22) is capillary inactive.

2. Device as claimed in claim 1, **characterized in that** the cover (2) is formed by a transparent plate, into which parallel indentations are inserted for formation of the greater recesses (22).

3. Device as claimed in claim 1, **characterized in that** the capillary gaps (3) are formed by a space resulting from the micro-beads (12) projecting from out of the cavities (11).

4. Device as claimed in claim 1, **characterized in that** the capillary gaps (3) are formed by spacers on the support plate (1) and/or on the barriers (21).

5. Device as claimed in claim 1, **characterized in that** the barriers (21) are provided with a hydrophilic and hydrophobic, respectively, surface in the range where contacting the support plate (1), whereby at least the side walls of the recesses (22) limiting the barriers (21) are provided with a respective oppositely active surface coat.

6. Device as claimed in claim 1, **characterized in that** the support plate (1) and the cover (2) are mounted, by means of a guidance (6), relative to each other in a connection which is laterally displaceable and rotatable by 90°.

7. Device as claimed in claims 1 and 6, **characterized in that**, subsequent to the barriers (21) at least one porous portion (23) and a further plane section (24) are allocated to said cover (2), whereby said a further plane section (24) covers the entire support plate (1).

8. Device as claimed in claim 1, **characterized in that** the liquid supply for the gaps takes place in the support plate (1) via bores (13), one respective of which being pre-positioned to a respective row of cavities.

9. Device as claimed in claim 1, **characterized in that** the liquid supply for the gaps takes place in the cover (2) via bores (25), one respective of which being pre-positioned to a respective row of cavities.

10. Device as claimed in claims 1 and 8 or 9, **characterized in that** said bores (13 or 25) are provided with hose-like connections (5) or fitting pieces, which are each connected to a liquid supply means (4), a defined pressure being adapted to be applied to said liquid supplay means (4).

## Revendications

1. Le dispositif pour effectuer une synthèse pratiquement simultanée d'une pluralité d'échantillons comprenant une plaque porte-échantillons plane (1) doté d'une pluralité de cavités (11) disposées de manière régulière sur une trame qui se répète, formant des lignes destinées à loger des micro-granules (12), est **caractérisé en ce que** la conception du dispositif prévoit un recouvrement démontable (2) pourvu de ponts 21 de largeur définie qui recouvrent les cavités (11) d'au moins d'une ligne de cavités et établissent des écarts entre les ponts de manière que entre les micro-granules (12) et les ponts, des fentes capillaires (3) puissent se former dont chacune est reliée à un dispenseur dosable de liquide (4), et que les évidements (22) entre les ponts juxtaposés (21) soient suffisamment grands pour que les forces capillaires des évidements demeurent inactives.

2. Le dispositif suivant la revendication 1 est **caractérisé en ce que** le recouvrement (2) est constitué d'une plaque transparente sur laquelle sont réalisées des cavités disposées en parallèle pour former des évidements plus importants (22).

3. Le dispositif suivant la revendication 1 est **caractérisé en ce que** la fente capillaire (3) est formée par l'écart entre les micro-granules 12 dépassant les cavités 11.

4. Le dispositif suivant la revendication 1 est **caractérisé en ce que** la fente capillaire (3) est formée par des écarteurs montés sur la plaque porte-échantillons (1) et /ou sur les ponts (21).

5. Le dispositif suivant la revendication 1 est **caractérisé en ce que** les ponts (21) dans la section où ils reposent sur la plaque porte-échantillons (1) sont recouverts d'un dépôt superficiel hydrophile ou hydrophobe et qu'au moins les parois latérales des évidements (21) délimitant les ponts (22) sont pourvues d'un dépôt superficiel aux effets opposés à ceux de l'évidement voisin.

6. Le dispositif suivant la revendication 1 est **caractérisé en ce que** la plaque porte-échantillons (1) et le recouvrement (2) sont attachés l'une à l'autre par un guidage (6) leur permettant de se déplacer latéralement et de tourner de 90°.

7. Le dispositif suivant les revendications 1 et 6 est **caractérisé en ce que** le recouvrement (2) se voit attribuer, en aval des ponts (21), une ou plusieurs sections poreuses (23) et une autre section planaire (24) couvrant toute la plaque porte-échantillons (1).

8. Le dispositif suivant la revendication 1 est **caractérisé en ce que** l'alimentation en eau de chacune des fentes est effectuée par l'intermédiaire d'ouvertures (13) réalisées sur la plaque porte-échantillons (14) et disposées en amont de chacune des lignes aux cavités.

9. Le dispositif suivant la revendication 1 est **caractérisé en ce que** l'alimentation en eau de chacune des fentes est effectuée par l'intermédiaire d'ouvertures(25) réalisées sur la plaque support (2) et disposées en amont de chacune des lignes aux cavités.

10. Le dispositif suivant les revendications 1 et 8 et 9 est **caractérisé en ce que** les perçages mentionnés (13 et 25) sont dotés de raccords flexibles (5) ou de raccords d'adaptation reliés chacun à un des réservoirs de liquide (4) soumis à une pression définie.
